# EUROPEAN PATENT APPLICATION

(11) **EP 4 789 948 A1**
(43) Date of publication of application: **12.08.2026**
(21) Application number: 25156620.4
(22) Date of filing: 07.02.2025
(51) Int. Cl.: B62B 3/06, B62B 5/00, B62B 5/06

(54) **A TILLER HANDLE TRUCK, A METHOD FOR OPERATING A TILLER HANDLE TRUCK, A COMPUTER EXECUTABLE SOFTWARE AND A METHOD FOR MODIFYING AN EXISTING TILLER HANDLE TRUCK**

(71) Applicant: Toyota Material Handling Manufacturing Sweden AB, 595 81 Mjölby (SE)
(72) Inventor: TENGVERT, Peter, 591 52 Motala (SE); EK, Filip, 587 58 Linköping (SE); EKSTRÖM, Simon, 591 52 Motala (SE); ANDERSSON, Jesper, 583 94 Nykil (SE)
(74) Representative: Zacco Sweden AB

(57) **Abstract**

A tiller handle truck (1) is disclosed, featuring a tiller arm (3) with a handle (4), a steered wheel (10, 11) hinged on a vertical axle (13), and a load carrier (12) with two forks. The truck includes a hydraulic system for lifting and lowering loads, a drive device (30) for powering the steered wheel, and a control unit (60) for managing the drive device. A sensor device (50) detects external forces on the handle (4) or tiller arm (3) and wheel rotation, sending data to the control unit (60) to adjust power to the drive device. The truck is primarily used in material handling applications, enhancing operator efficiency and safety. The disclosure further relates to a method for operating a tiller handle truck (1), a computer executable software stored on a computer readable medium (201) that when transferred to and stored on a control arrangement (60) of a driving arrangement (1) and a method for modifying an existing tiller handle truck.

## Description

### Technical field

The present invention relates to a tiller handle truck, a method for operating a tiller handle truck, a computer executable software, and a method for modifying an existing tiller handle truck. More specifically, the disclosure relates to a tiller handle truck, a method for operating a tiller handle truck, a computer executable software stored on a computer readable medium and a method for modifying an existing tiller handle truck as defined in the introductory parts of the independent claims.

### Background art

Tiller handle trucks have been known for a long time. They can also be called pallet trucks, pallet jacks, pallet pumps, pump truck, dog, jigger, or hand truck.

The present invention relates to material handling equipment, specifically to a tiller handle truck designed for improved manoeuvrability and ease of use in various industrial and commercial settings.

Tiller handle trucks are widely used in warehouses, factories, and retail environments for the efficient movement of palletized goods. Traditional tiller handle trucks typically feature a hydraulic lifting mechanism, a pair of forks for engaging pallets, and a tiller handle for steering and control. While these trucks are effective for their intended purpose, there are several limitations and challenges associated with their use.

Document EP 2699509 B1 discloses a motorized drive assembly for upgrading manually powered pallet jacks. The assembly includes a drive wheel positioned between two steering wheels. The drive assembly is provided with a frame for attachment, a drive wheel supported by a drive axle, and a motor to rotate the drive wheel. This type of drive assembly is complex and requires a lot of parts.

### Summary

One significant challenge is the ergonomic strain placed on operators during extended periods of use. The repetitive motion required to manoeuvre the truck can lead to fatigue and potential injury. Additionally, traditional tiller handle designs may not provide optimal control and precision, particularly in confined spaces or when navigating tight corners.

Another limitation is the lack of advanced features that enhance safety and efficiency. For example, many existing models do not incorporate electronic assistance for pushing or puling loads, which can result in inconsistent performance and increased physical effort for the operator.

There is thus a need for an improved tiller handle truck with enhanced ergonomic features, improved manoeuvrability, and safety mechanisms. The invention is intended to reduce operator fatigue, increase productivity, and enhance overall safety in material handling operations.

It is an object of the present disclosure to mitigate, alleviate or eliminate one or more of the above-identified deficiencies and disadvantages in the prior art and solve at least the above-mentioned problem.

According to a first aspect there is provided a tiller handle truck, comprising a tiller arm, with a handle, a steered wheel that is hinged in a vertical axle, a load carrier preferably comprising two forks, a hydraulic system, arranged to lift and lower the load carrier, for handling loads. The tiller arm is connected to the steered wheel for steering the steered wheel by rotating the tiller arm around the vertical axle. The tiller handle truck further comprises a drive device that is operatively connected to the steered wheel for powering the steered wheel. The tiller handle truck further comprises a control unit which is configured to control the drive device. The tiller handle truck further comprises a sensor device for detecting an external force on the handle and/or the tiller arm, and/or a rotation of at least one wheel preferably the steered wheel, of the tiller handle truck. The sensor device is arranged to send sensor data to the control unit, wherein the control unit is arranged to control the drive device by controlling power to the drive device based on the received sensor data. Preferably the control unit is arranged such that the controlled power is limited to giving an operator help in accelerating the pallet truck from a stand-still mode to a moving mode. Preferably the tiller handle truck is a manual tiller handle truck that is operable by pulling or pushing the tiller handle by an operator, during use of the tiller truck.

The advantage of this tiller handle truck is that it is still within the frame structure of a tiller handle truck can achieve a considerable improvement for the operation of tiller handle truck. In order to help an operator of the tiller handle truck, a drive device is implemented. In doing so despite the very limited dimensions at hand, a powered tiller handle truck can be achieved, thus providing a more efficient operation of the pallet truck during a full working day. The operator can also still perform manual operation of the pallet truck if desired. Another advantage is, for example, the tiller handle truck reducing operator fatigue and increasing efficiency by assisting in the acceleration of the truck, making it easier to handle heavy loads.

The sensor device may be a sensor for detecting a push or pull force on the handle and wherein the sensor is located at the handle. The sensor may be configured to measure the amount of push or pull force. For example, if the operator pushes the tiller handle truck with a small force, the control unit sends a small amount of power to the drive device. In other words, the more force the sensor detects, the more power is sent to the drive device thereby helping the operator pushing or pulling the tiller handle truck.

The sensor offers the advantage of precise detection of the operator's input force, allowing for more accurate control of the tiller handle truck's movements.

According to an example, the sensor device comprises a switch, located at the handle, and configured to detect a push or pull force. The switch may be an on/off switch or switch capable of detecting the amount of push or pull force. The switch may act as a dead man's switch, meaning that when the operator releases the switch, the control unit stops the power to the drive device.

The switch offers the advantage of precise detection of the operator's input force, allowing for more accurate control of the tiller handle truck's movements. Another advantage is increased safety for the operator.

According to an example, the sensor device may be a rotational sensor integrated in the steered wheel and/or at the drive device. For example, the senor detects the rotational direction of the steered wheel and/or at the drive device, the control unit then controls the drive device to rotate the steered wheel the same direction. The rotational sensor may be for example a rotary potentiometer, hall effect sensor, resolver, Rotary Variable Differential Transformers (RVDT) or an inductive sensor.

The rotational sensor offers the advantage of accurately monitoring the wheel's rotation, enabling better control of the tiller handle truck's speed and direction.

The control unit is further configured to determine the operable speed of the tiller handle truck, based on received sensor data, and configured to limit the operable speed to a predetermined safety speed. In an example, the speed of the tiller handle truck may be determined by a rotational sensor integrated in the steered wheel and/or at the drive device. In an example, the speed is limited to 2 km/h or more preferably 1 km/h.

By determining the speed provides the advantage of enhancing safety by preventing the truck from exceeding a safe operating speed.

According to an example, the sensor device may comprise a sensor at the tiller arm configured to detect mechanical strain on the tiller arm, wherein the control unit is arranged to receive strain data and determine if the tiller arm has been pushed or pulled by an operator, preferably said sensor comprises a wire strain gauge. The sensor may be a strain gauge or any suitable sensor for measuring mechanical strain.

The sensor offers the advantage of detecting mechanical strain, providing additional data for more precise control, and enhancing the tiller handle truck's safety and performance.

The tiller handle truck may further comprise a power train arranged to connect the drive device to the steered wheel. The power train may be for example a chain, drive belt, gear drive or a direct connection between the drive device and the steered wheel.

The power train provides the advantage of efficient power transmission from the drive device to the steered wheel, improving the truck's overall performance.

According to an example, the drive device may comprise an electrical motor and a battery wherein the battery is configured to power the electrical motor. The electrical motor may be used as a generator for charging said battery in a speed reducing situation. In an example, the tiller handle truck is arranged with a switch with which the operator can activate the motor to be used as a generator in order to reduce the speed of the tiller handle truck. I.e. using the motor as a brake. The battery may also be removable from the drive device.

By having a removable battery, it facilitates the service of the tiller handle truck, since it is easy to replace the battery.

According to an example, the battery may be arranged separately from the drive device. The battery may be arranged at the tiller arm, electrically connected to the electrical motor in order to power the electrical motor. Preferably the position of the battery is a middle position on an elongated section of tiller arm that begins at the steered wheel and ends at handle. The battery may be arranged at any suitable location on the tiller handle truck. In addition to powering the electrical motor, the battery may also be configured to power other auxiliary devices, such as flashlights, power-tools or mobile phones. The battery may also be removable from the tiller arm. The battery may be arranged with auxiliary devices. In one example a flashlight is arranged at the battery. So, when the battery is removed from the tiller arm, the battery may be used as a flashlight separately from the tiller handle truck.

By having a removable battery, it facilitates the service of the tiller handle truck, since it is easy to replace the battery. Furthermore, by arranging the battery at the tiller arm provides a more ergonomic situation for an operator when servicing the tiller handle truck.

An advantage of configuring the battery to power auxiliary devices, such as a flashlight, is that an operator can use the tiller handle truck in dark places, such as inside the cargo space of a truck or in a dark warehouse. An advantage of having the battery powering a flashlight is improved visibility thus improved safety of the operator operating the tiller handle truck.

A battery is a simple solution for powering the electric motor, instead of an external cable for example.

By using the electrical motor as a generator offers the advantage of providing a sustainable power source and the ability to regenerate energy during speed reduction, enhancing the truck's energy efficiency.

According to an example, the electrical motor comprises a hub motor arranged at the steered wheel. Alternatively, the hub motor may be configured to be housed within the steered wheel.

The hub motor provides the advantage of a compact and efficient motor design, improving the truck's manoeuvrability and reducing maintenance requirements.

According to an example, the powertrain is operatively connected to gear wheels. The gear wheels are operatively connected to a gear that are operatively connected to an axle. The axle is operatively connected to the steered wheel. When the drive device is activated, the electrical motor activates the powertrain so that the gear wheel rotates, which causes the steered wheel to rotate, since the steered wheel is operatively connected to the axle and the gear.

According to an example, the electrical motor can be operatively connected directly to the axle in order to rotate the steered wheel. Alternatively, the electrical motor can be operatively connected to the axle via the gear.

According to a second aspect there is provided a method for operating a tiller handle truck, comprising the steps of:
detecting an external force on a handle of the tiller handle truck, and/or a rotation of a steered wheel of the tiller handle truck, and/or a tiller arm of the tiller handle truck,
determining a direction of the external force, and/or a rotation direction of the steered wheel, based on the direction of the external force and/or the rotational direction of the steered wheel,
activating a drive device so that the traveling direction is the same as the direction of the external force and/or the rotational direction of the steered wheel.

The method offers the advantage of intuitive control, allowing the truck to move in the direction intended by the operator with minimal effort.

The method further comprises the steps of:
deactivating the drive device after a predetermined time. The predetermined time may be less than 5 seconds, preferably less than 4 seconds, even more preferably less than 3 seconds, even more preferably less than 2 seconds, even more preferably less than 1 second.

By deactivating the drive device after a predetermined time provides the advantage of conserving energy and preventing unnecessary operation of the drive device, enhancing the truck's efficiency and safety.

The method further comprises the steps of:
determining the operable speed of the tiller truck, by means of the sensor device, determining if the operable speed is higher than a predetermined safety speed, wherein if the speed is determined to be higher than the predetermined speed, perform the step of,
controlling the drive device, preferably by using the drive device as a generator and charging a comprised battery, so that the operable speed is lower than the predetermined safety speed, the predetermined safety speed may by lower than 2 km/h or more preferably lower than 1 km/h,
controlling the operable speed so that the operable speed is lower than the predetermined safety speed. offers the advantage of maintaining safe operating speeds and utilizing regenerative braking to enhance energy efficiency.

The method further comprises the steps of:
detecting an external force on the handle of the tiller handle truck,
determining the direction of the external force,
determining the operable speed of the tiller truck, wherein if the direction of the external force is opposite to the traveling direction, perform the step of, controlling the drive device so that the operable speed is reduced.

All method steps may be carried out in any suitable order.

By detecting an external force on the handle gives the advantage of enhancing safety by reducing the truck's speed when the operator applies a force in the opposite direction, preventing potential accidents.

According to a third aspect there is provided a computer executable software stored on a computer readable medium that when transferred to and stored on a control arrangement of a driving arrangement according to any of the first aspect, performs the method according to the second aspect.

The advantage of having the software is that it can be easily copied to several control units of several pallet trucks. It can also easily be downloaded and updated from the internet, or locally by a manual setting on the pallet truck.

According to a fourth aspect there is provided a method for modifying an existing tiller handle truck, comprising the steps of:
providing a non-powered tiller handle truck,
modifying the non-powered tiller handle truck such that a tiller handle truck according to any of the first aspect is achieved.

The advantage here is that an old pallet truck can be modified into a more efficient and better pallet truck. The modified pallet truck has also all the discussed advantages above.

Effects and features of the second through fourth aspects are to a large extent analogous to those described above in connection with the first aspect. Embodiments mentioned in relation to the first aspect are largely compatible with the second through fourth aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1a shows a perspective view of the tiller handle truck according to the invention.
Figure 1b shows a perspective view of the tiller handle truck according to the invention.
Figure 2a shows a bottom view of the tiller handle truck according to the invention.
Figure 2b shows a bottom view of the tiller handle truck according to the invention.
Figure 2c shows a bottom view of the tiller handle truck according to the invention.
Figure 3 shows a flowchart of a method for operating a tiller handle truck.
Figure 4 shows an example of a computer readable medium.
Figure 5 shows a flowchart of a method for modifying an existing tiller handle truck.

### Detailed description

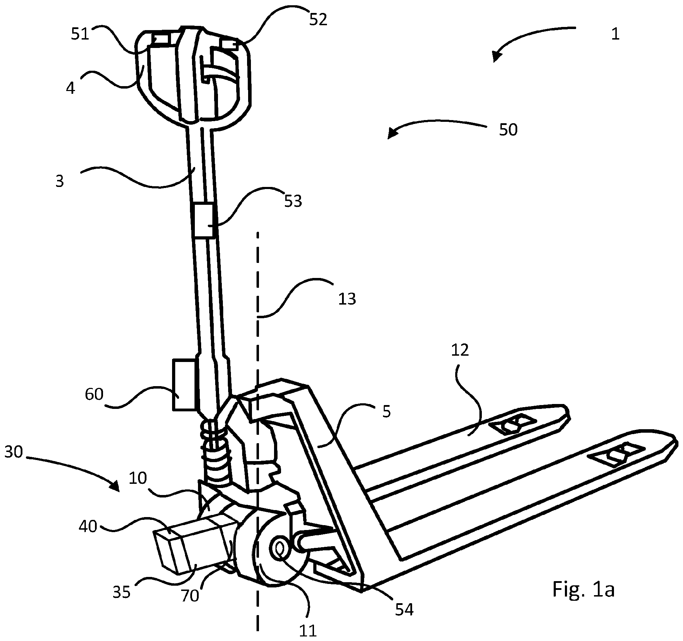

The present disclosure is related to tiller handle trucks, figure 1a, which mainly are manually operated by an operator pushing or pulling the tiller handle truck. Thus, the present disclosure should not be confused with material handling vehicles (MHV) in general. Even though MHVs in general also may have a load carrier in the shape of two forks, the tiller handle truck is far more basic and simpler in its design and construction than most MHVs. In general, MHVs cannot be operated if they are not powered by a motor that provides the ability to move the material handling vehicle, i.e. if the battery of the MHV if the motor is electric, the MHV cannot operate, and also not be moved. The tiller handle truck has a simple hydraulic system, which is not as complex as om most MHV's, in general the lifting operation is made with a manual pumping of a tiller handle, to lift a load. Thus, hydraulic system of the tiller handle truck comprises a simple pump that is in general not driven by a motor. The power source for the operation of the main object of the tiller handle truck is the muscles of the operator. The tiller handle truck may be operated in harsh conditions both outside and inside. thus, the tiller handle truck should not be provided with tires and suspension that will require frequent maintenance. The tiller handle truck is in general a low lifter truck and thus has the ability to lift a pallet for example a few centimetres for essentially horizontal travel. Preferably, the tiller handle truck does not have a mast for lifting pallets higher than for example 10-25 cm. The tiller handle truck in general does not require any kind of permit, license or particular education to be operated.

Figure 1a shows a tiller handle truck 1, comprising; a tiller arm 3, with a handle 4, a steered wheel 10, 11 that is hinged in a vertical axle 13, a load carrier 12 preferably comprising two forks, a hydraulic system, arranged to lift and lower the load carrier 12, for handling loads. The tiller arm 3 is connected to the steered wheel 10, 11 for steering the steered wheel 10, 11 by rotating the tiller arm 3 around the vertical axle 13. The tiller handle truck further comprises a drive device 30 operatively connected to the steered wheel 10, 11 for powering the steered wheel 10, 11. The tiller handle truck further comprises a control unit 60 configured to control the drive device 30. The tiller handle truck further comprises a sensor device 50 for detecting an external force on the handle 4 and/or the tiller arm 3, and/or a rotation of at least one wheel preferably the steered wheel, of the tiller handle truck 1. The sensor device 50 is arranged to send sensor data to the control unit 60, wherein the control unit 60 is arranged to control the drive device 30 by controlling power to the drive device 30 based on the received sensor data. The control unit 60 is arranged such that the controlled power is limited to giving an operator help in accelerating the pallet truck 1 from a stand-still mode to a moving mode, preferably the tiller handle truck is a manual tiller handle truck 1 that is operably by pulling or pushing the tiller handle by an operator, during use of the tiller truck.

There are two main wheels 10 that are hinged in a vertical axle. The tiller arm 3 is attached to the wheels 10 such that it can swing the wheels 10 for steering the tiller handle truck 1. The handle 4 on the tiller arm 3 is easily graspable by an operator for operation of the tiller handle truck 1. Further smaller rolls or wheels are provided under each fork 12.

Figure 1a further shows that the sensor device 50 comprises a sensor 51 for detecting a push or pull force on the handle 4 and wherein the sensor 51 is located at the handle 4.

Figure 1a further shows that the sensor device 50 comprises a switch 52, located at the handle 4, and configured to detect a push or pull force. The switch may act as an on/off switch for control unit. The switch may further act as a dead man's switch, i.e. deactivating the control unit if the operator releases the handle.

Figure 1a further shows that the sensor device 50 comprises a sensor 53 at the tiller arm 3 configured to detect mechanical strain on the tiller arm 3, wherein the control unit 60 is arranged to receive strain data and determine if the tiller arm 3 has been pushed or pulled by an operator, preferably said sensor comprises a wire strain gauge.

Figure 1a further shows that the sensor device 50 comprises a rotational sensor 54 integrated in the steered wheel 10, 11.

The rotational sensor is further configured to determine the operable speed of the tiller handle truck 1 and configured to instruct the control unit 60 to limit the operable speed to a predetermined safety speed.

The control unit 60 is further configured to determine the operable speed of the tiller handle truck 1, based on received sensor data and configured to limit the operable speed to a predetermined safety speed.

Figure 1a further shows that the tiller handle truck 1 comprises a power train 70 arranged to connect the drive device 30 to the steered wheel 10, 11. For example, the drive device 30 comprises an electrical motor 35 and a battery 40 wherein the battery 40 is configured to power the electrical motor 35. The electrical motor 35 may be used as a generator for charging said battery 40 in a speed reducing situation. The electrical motor may also be used as a brake if the operable speed is above the safety speed. For example, if the tiller handle truck is operated downhill, the operable speed may be too high, the electrical motor can reduce the operable speed by acting as a brake.

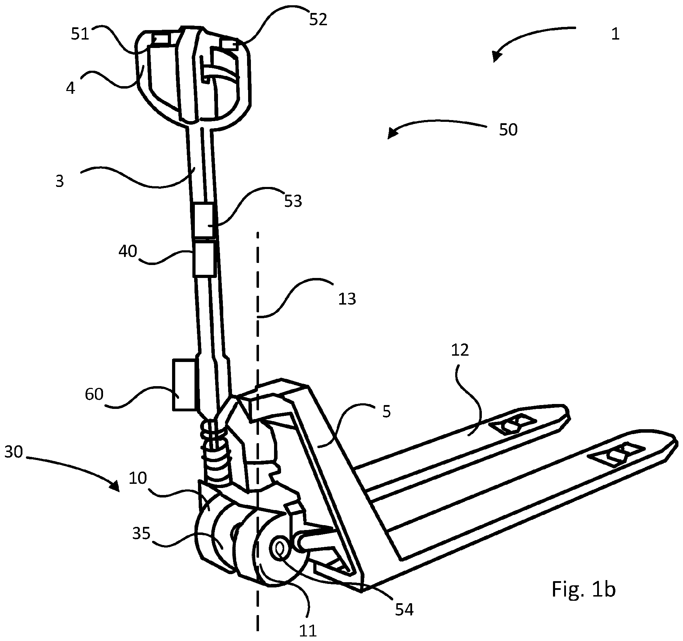

Figure 1b shows the tiller handle truck according to an example. Figure 1b shows that the electrical motor 35 is a hub motor arranged within the steered wheel 10, 11. Figure 1b further shows that the battery 40 is arranged at the tiller arm 3. The battery 40 is electrically connected to the electrical motor 35 by cables (not shown) for powering the electrical motor 35.

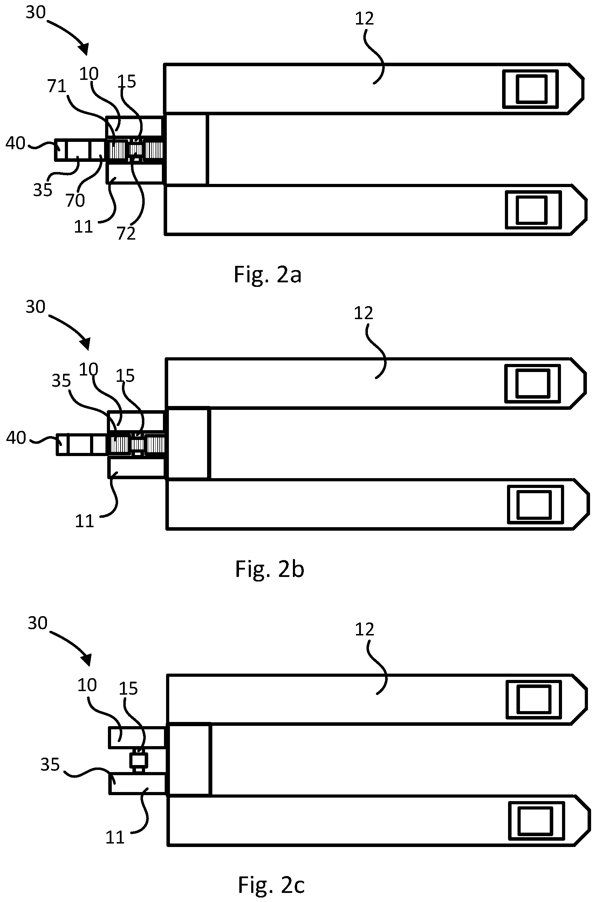

Figure 2a shows a bottom view of the tiller handle truck 1 according to an example. Figure 2a shows that the powertrain 70 is operatively connected to gear wheels 71. The gear wheels 71 are operatively connected to a gear 72 that are operatively connected to an axle 15. The axle 15 is operatively connected to the steered wheel 10, 11. When the drive device 30 is activated, the electrical motor 35 activates the powertrain 70 so that the gear wheel 71 rotates, which causes the steered wheel 10, 11 to rotate since the steered wheel 10, 11 is operatively connected to the axle 15 and the gear 72.

Figure 2b shows a bottom view of the tiller handle truck 1 according to an example. Figure 2b shows that the electrical motor 35 can be operatively connected directly to the axle 15 in order to rotate the steered wheel 10, 11. Alternatively, the electrical motor 35 can be operatively connected to the axle 15 via the gear 72.

Figure 2c shows a bottom view of the tiller handle truck 1 according to an example. Figure 2c shows that the electrical motor 35 is a hub motor. The hub motor is configured to be housed within the steered wheel 10, 11.

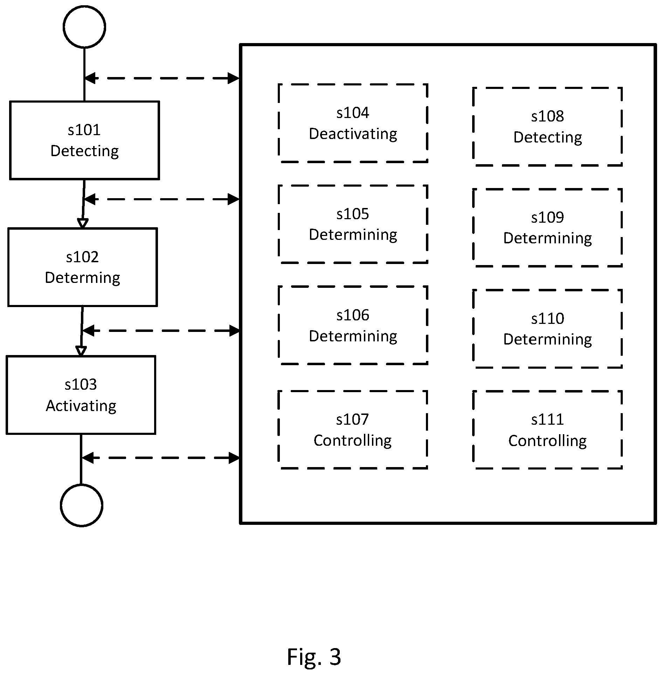

Figure 3 shows a flowchart of a method according to an example. The method relates to operating a tiller handle truck 1. The method comprising the steps of: Detecting s101 an external force on a handle 4 of the tiller handle truck 1, and/or a rotation of a steered wheel 10, 11 of the tiller handle truck, and/or a tiller arm 3 of the tiller handle truck, determining s102 a direction of the external force, and/or a rotation direction of the steered wheel 10, 11, based on the direction of the external force and/or the rotational direction of the steered wheel 10, 11, activating s103 a drive device 30 so that the traveling direction is the same as the direction of the external force and/or the rotational direction of the steered wheel 10, 11.

The method above can be modified by one or more of the following steps:
- deactivating 104 the drive device 3 after a predetermined time.

The method above can be modified by the further steps of:
- determining s105 the operable speed of the tiller truck 1, by means of the sensor device 50,
- determining s106 if the operable speed is higher than a predetermined safety speed,
- wherein if the speed is determined to be higher than the predetermined speed, perform the step of, controlling s107 the drive device 30, preferably by using the drive device as a generator and charging a comprised battery, so that the operable speed is lower than the predetermined safety speed.

The method above can be modified by one or more of the following steps:
- detecting s108 an external force on the handle 4 of the tiller handle truck,
- determining s109 the direction of the external force,
- determining s110 the operable speed of the tiller truck 1, wherein if the direction of the external force is opposite to the traveling direction, perform the step of,
- controlling s111 the drive device 30 so that the operable speed is reduced.

Figure 3 shows that any of the method steps s104-s111 can be carried out before or after each of the steps s101, s102 or s103.

There is also disclosed a computer executable software stored on a computer readable medium 201 and transferred to and stored on a control unit 60 of a tiller handle truck 1 according to any of the aspects above, performs the method according to any of the aspects above. The computer readable medium can be an external memory device, a PC computer, a service computer, a webserver etc. The software can thus be installed through attachment of a cable or by attaching an external memory device in a slot, or also downloadable through a wired/wireless interface etc.

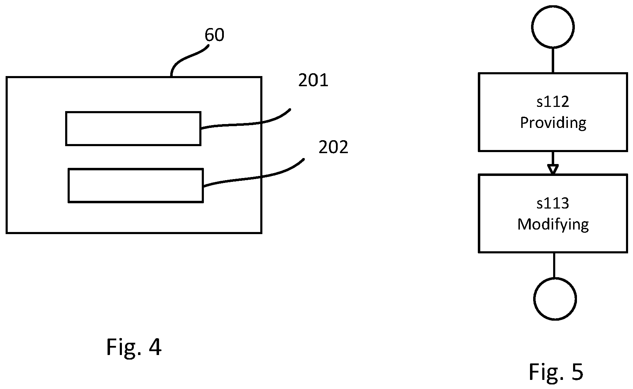

Figure 4 schematically illustrates the control unit 60 of the tiller handle truck 1. The control unit comprises the computer readable medium 201 and at least one data processing unit 202. The control unit 60 may be configured to perform the method described above upon execution of the computer executable software P by the at least one data processing unit 202.

The computer executable software P comprises computer-readable instructions that may be stored in the computer readable medium 201.

Figure 5 shows a flowchart of a method according to an example. This relates to a method for modifying an existing tiller handle truck, comprising the steps of, providing a non-powered tiller handle truck. The provided pallet truck can be a newly produced pallet truck or a used pallet truck. As pallet trucks are sturdy the pallet truck can have a considerable age when modified. The next step of the method is: modifying the non-powered tiller handle truck such that a tiller handle truck according to any of the above aspects is achieved.

## Claims

1. A tiller handle truck (1), comprising;
a tiller arm (3), with a handle (4),
a steered wheel (10, 11) that is hinged in a vertical axle (13),
a load carrier (12) preferably comprising two forks,
a hydraulic system, arranged to lift and lower the load carrier (12), for handling loads,
wherein the tiller arm (3) is connected to the steered wheel (10, 11) for steering the steered wheel (10, 11) by rotating the tiller arm (3) around the vertical axle (13),
a drive device (30) operatively connected to the steered wheel (10, 11) for powering the steered wheel (10, 11),
a control unit (60) configured to control the drive device (30),
**characterized in that**
further comprised is a sensor device (50) for detecting an external force on the handle (4) and/or the tiller arm (3), and/or a rotation of at least one wheel preferably the steered wheel, of the tiller handle truck (1),
wherein the sensor device (50) is arranged to send sensor data to the control unit (60), wherein the control unit (60) is arranged to control the drive device (30) by controlling power to the drive device (30) based on the received sensor data,
preferably the control unit (60) is arranged such that the controlled power is limited to giving an operator help in accelerating the pallet truck (1) from a stand-still mode to a moving mode,
preferably the tiller handle truck is a manual tiller handle truck (1) that is operably by pulling or pushing the tiller handle by an operator, during use of the tiller truck.

2. The tiller handle truck (1) according to claim 1, wherein the sensor device (50) comprises a sensor (51) for detecting a push or pull force on the handle (4) and wherein the sensor is located at the handle (4).

3. The tiller handle truck (1) according to any of the claims above, wherein the sensor device (50) comprises a switch (52), located at the handle (4), and configured to detect a push or pull force.

4. The tiller handle truck (1) according to any of the claims 1-3, wherein the sensor device (50) comprises a rotational sensor (54) integrated in the steered wheel (10, 11) and/or at the drive device (30), preferably the control unit (60) is further configured to determine the operable speed of the tiller handle truck (1), based on received sensor data from the rotational sensor (54) and configured to limit the operable speed to a predetermined safety speed.

5. The tiller handle truck (1) according to any of the claims above, wherein the sensor device (50) comprises a sensor (53) at the tiller arm (3) configured to detect mechanical strain on the tiller arm (3), wherein the control unit (60) is arranged to receive strain data and determine if the tiller arm (3) has been pushed or pulled by an operator, preferably said sensor comprises a wire strain gauge.

6. The tiller handle truck (1) according to any of the claims above, wherein the tiller handle truck (1) further comprises a power train (70) arranged to connect the drive device (30) to the steered wheel (10, 11).

7. The tiller handle truck (1) according to any of the claims above, wherein the drive device (30) comprises an electrical motor (35) and a battery (40) wherein the battery (40) is configured to power the electrical motor (35), preferably said electrical motor (35) may be used as a generator for charging said battery (40) in a speed reducing situation, preferably the electrical motor (35) comprises a hub motor arranged at or within the steered wheel (10, 11).

8. The tiller handle truck (1) according to claim 7, wherein the battery (40) is arranged at the tiller arm (3), electrically connected to the electrical motor (35) for powering the electrical motor (35), preferably the position of the battery (40) is a middle position on an elongated section of tiller arm (3) that begins at the steered wheel (10, 11) and ends at the handle (4).

9. The tiller handle truck (1) according to any of the claims 7-8, wherein the battery (40), in addition to powering the electrical motor (35), is further configured to power auxiliary devices.

10. A method for operating a tiller handle truck (1), comprising the steps of:
- detecting (s101) an external force on a handle (4) of the tiller handle truck (1), and/or a rotation of a steered wheel (10, 11) of the tiller handle truck, and/or a tiller arm (3) of the tiller handle truck,
- determining (s102) a direction of the external force, and/or a rotation direction of the steered wheel (10, 11),
- based on the direction of the external force and/or the rotational direction of the steered wheel (10, 11), activating (s103) a drive device (30) so that the traveling direction is the same as the direction of the external force and/or the rotational direction of the steered wheel (10, 11).

11. The method according to claim 10, wherein the method further comprises the steps of:
- deactivating (104) the drive device (3) after a predetermined time.

12. The method according to any of the claims 10-11, wherein the method further comprises the steps of:
- determining (s105) the operable speed of the tiller truck (1), by means of the sensor device (50),
- determining (s106) if the operable speed is higher than a predetermined safety speed,
- wherein if the speed is determined to be higher than the predetermined speed, perform the step of,
- controlling (s107) the drive device (30), preferably by using the drive device as a generator and charging a comprised battery, so that the operable speed is lower than the predetermined safety speed.

13. The method according to any of the claims 10-12, wherein the method further comprises the steps of:
- detecting (s108) an external force on the handle (4) of the tiller handle truck,
- determining (s109) the direction of the external force,
- determining (s110) the operable speed of the tiller truck (1),
- wherein if the direction of the external force is opposite to the traveling direction, perform the step of,
- controlling (s111) the drive device (30) so that the operable speed is reduced.

14. A computer executable software stored on a computer readable medium (201) that when transferred to and stored on a control unit (60) of a tiller handle truck (1), according to any of the claims 1-9, performs the method according to any of the claims 10-13.

15. A method for modifying an existing tiller handle truck, comprising the steps of,
- providing (s112) a non-powered tiller handle truck,
- modifying (s113) the non-powered tiller handle truck such that a tiller handle truck according to any of the claims 1-9 is achieved.
